# EUROPÄISCHE PATENTANMELDUNG

(11) **EP 3 490 082 A1**
(43) Veröffentlichungstag der Anmeldung: **29.05.2019**
(21) Anmeldenummer: 18210219.4
(22) Anmeldetag: 01.09.2009
(51) Int. Cl.: H01R 25/14, H01R 41/00, H02G 5/04

(54) **SCHLEIFLEITUNG, STROMABNEHMER UND SCHLEIFLEITUNGSSYSTEM**

(30) Priorität: 03.09.2008 DE 102008045482
(62) Teilanmeldung aus: 09782460.1
(71) Anmelder: Conductix-Wampfler GmbH, 79576 Weil am Rhein (DE)
(72) Erfinder: Schmiedle, Andreas, 79541 Lörrach (DE); Wenk, Matthias, 79588 Efringen-Kirchen (DE); Schirmeier, Frank, 79650 Schopfheim (DE)
(74) Vertreter: Charrier Rapp & Liebau

(57) **Zusammenfassung**

Die Erfindung betrifft: eine Schleifleitung (2) zur Versorgung mindestens einer an der Schleifleitung (2) verfahrbaren Vorrichtung (11), mit einem ersten länglichen Leiterstrang (5b) und mindestens einem weiteren, zweiten länglichen Leiterstrang (6b), wobei der erste (5b) bzw. zweite (6b) Leiterstrang eine entlang seiner Längsausdehnung verlaufende erste (5f) bzw. zweite (6f) Kontaktöffnung zur Aufnahme eines Teils (15a; 16a) eines ersten (15) bzw. zweiten (16) Schleifkontakts eines Stromabnehmers (14) der Vorrichtung (11) aufweist; einen Stromabnehmer (3) mit mindestens einem zum Eingreifen in eine entlang der Länge eines ersten Leiterstrangs (5b) der Schleifleitung (2) verlaufenden ersten Kontaktöffnung (5f) und zum elektrischen Verbinden mit dem ersten Leiterstrang (5b) vorgesehenen ersten Schleifkontakt (15); und ein hieraus gebildetes Schleifleitungssystem (1). Die Erfindung löst die Aufgabe, eine einfache, schnelle und dennoch verwechslungssichere Verbindung eines bestimmten Schleifkontakts mit einem bestimmten Leiterstrang einer Schleifleitung zu ermöglichen, durch eine Schleifleitung (2), einen Stromabnehmer (14) und ein Schleifleitungssystem (1), bei denen die zweite Kontaktöffnung (6f) des zweiten Leiterstrangs (6b) so ausgebildet ist, dass der zur Verbindung mit dem ersten Leiterstrang (5b) vorgesehene erste Schleifkontakt (15) nicht in die zweite Kontaktöffnung (6f) eingreifen kann und nicht mit dem zweiten Leiterstrang (9) verbindbar ist.

## Beschreibung

Die Erfindung betrifft eine Schleifleitung nach dem Oberbegriff des Anspruchs 1, einen Stromabnehmer nach dem Oberbegriff des Anspruchs 8 und ein Schleifleitungssystem nach dem Oberbegriff des Anspruchs 12.

Bei bekannten Schleifleitungssystemen fahren verfahrbare Vorrichtungen, z.B. Leitungswagen oder Transportgehänge einer Elektrohängebahn, mit oder ohne elektrische Verbraucher, entlang einer Schleifleitung. Zur Versorgung der Vorrichtung mit elektrischer Energie sind diese mit einem Stromabnehmer ausgestattet, dessen Schleifkontakte in entlang der Schleifleitung geführte Leiterstränge eingreifen. Die Vorrichtung können z.B. Transportgehänge oder auf Schienen verfahrbare Leitungswagen sein, welche mit einem elektrischen Fahrantrieb ausgerüstet sind, der von der Schleifleitung mit elektrischer Energie versorgt wird. Es können auch mehrere Transportgehänge aneinander gekoppelt werden, wobei dann oft nur das vorderste Transportgehänge mit einem elektrischen Fahrantrieb ausgerüstet ist. Die nachlaufenden anderen Transportgehänge hingegen dienen als reine Lastenträger ohne Fahrantrieb und sonstige elektrische Verbraucher.

Ein Beispiel eines derartigen bekannten und gattungsgemäßen Schleifleitungssystems zeigt die DE 196 47 336 A1. Dort ist ein entlang einer Montagestrecke an einer eigenständigen Laufschiene verfahrbarer Stromabnehmerwagen vorgesehen, bei dem Schleifkontakte in als Stromschienen ausgebildete Leiterstränge der Schleifleitung eingreifen.

Zum Schutz der Bedienpersonen und anderer Einrichtungen werden die Transportgehänge bzw. deren in der Regel metallischen Gehäuse und anderen Teilen, die keinen Strom führen sollen, geerdet. Hierzu ist ein Schutzschleifkontakt vorgesehen, der in einen als Schutzleiter ausgebildeten spannungsfreien und geerdeten Schutzleiterstrang der Schleifleitung eingreift. Die weiteren Leiterstränge sind Phasenleiter, die im Normalbetrieb unter Spannung stehen und Strom an die elektrischen Verbraucher liefern. Nachlaufende Transportgehänge ohne elektrische Verbraucher sind in der Regel ebenfalls über einen Schutzschleifkontakt mit dem Schutzleiterstrang verbunden. Hierdurch wird bei einem Fehlerfall, in dem Teile oder das Gehäuse des Transportgehänges unter Spannung stehen, eine möglichst schnelle Abschaltung der Phasenleiterspannung, beispielsweise durch eine Fehlerstromerkennung, sichergestellt, bevor eine Person oder weitere Anlagenteile unter Spannung gesetzt werden.

Oft sind die Schleifkontakte der Stromabnehmer zum Einklicken oder Einklippen in die Leiterstränge vorgesehen, um sie von einer ruhenden, kontaktfreien Stellung in eine Kontaktstellung am Leiterstrang bringen zu können. Dies erfolgt üblicherweise manuell durch eine Bedienperson. Hierbei besteht die Gefahr, dass aufgrund der oft schlecht zugänglichen Schleifkontakte oder fehlender Aufmerksamkeit und Sorgfalt der Bedienperson ein Schleifkontakt nicht in den für ihn vorgesehenen Leiterstrang eingeklippt wird, sondern in einen daneben liegenden Phasenleiterstrang. Dies ist insbesondere dann gefährlich, wenn auf diese Weise der Schutzschleifkontakt nicht in den Schutzleiterstrang eingeklippt wird, sondern in einen der Phasenleiterstränge, so dass sämtliche im Normalfall über den Schutzleiterstrang geerdeten und somit spannungsfreie Teile der Transportgehänge, die nicht zur Stromführung vorgesehen sind, oder dessen Gehäuse unter Spannung stehen bzw. beim Einschalten der Phasenleiterspannung unter Spannung gesetzt werden. Insbesondere wenn keine Fehlererkennung vorhanden ist, die einen derartigen Fehler erkennt und Alarm gibt, besteht hier beträchtliche Gefahr für das Bedienpersonal und Anlagenteile. Berührt beispielsweise eine Bedienperson die unter Spannung stehenden Teile, so erhält sie einen unter Umständen lebensgefährlichen elektrischen Schlag.

Besonders groß ist diese Gefahr beim Einklippen des Schutzschleifkontakts von Nachläuferwagen ohne elektrische Verbraucher, da diese keine zusätzlichen Schleifkontakte für die Phasenleiterstränge aufweisen. Wird dort ein Schutzschleifkontakt versehentlich in einen Phasenleiterstrang eingeklippt, steht der Nachläuferwagen bzw. dessen Gehäuse unter Betriebsspannung. Wird die korrekte Verbindung von Schutzschleifkontakt und Schutzleiterstrang nicht nochmals überprüft, so besteht ein großes Gefährdungspotential, da der Fehler oft längere Zeit gar nicht oder erst bei einem Unfall erkannt wird.

Um diese Gefahr zu verringern, schlägt die JP 08 072 593 A vor, bei einer Schleifleitung mit drei Leitern für die elektrische Energieversorgung und einem Erdleiter die seitlichen Führungen des Erdleiters farbig zu kennzeichnen. Diese Lösung verbessert zwar grundsätzlich den Schutz gegen das Einklippen eines Erdleiter-Stromabnehmerkontakts in einen Energieversorgungsleiter, da das Bedienpersonal dien Erdleiter besser von den Energieversorgungsleitern unterscheiden kann. Gleichwohl ist es dort trotzdem möglich, den Erdleiter-Stromabnehmerkontakt fehlerhaft mit einem der Energieversorgungsleiter zu verbinden, so dass die Gefahr einer Fehlbedienung nicht zuverlässig ausgeschlossen werden kann.

Die DE 195 19 644 A1 offenbart eine Vorrichtung für die Stromversorgung einer Hängetransportanlage, bei der ein Erdungsgleitstück einen gegenüber einem Standardgleitstück verbreiterten, isolierenden Träger vorsieht, welcher die Verbindung einer Bürste des Erdungsgleitstücks mit einem strom- und spannungsführenden Leiter einer zur Leistungsübertragung vorgesehen Standardeinheit verhindert. Nachteilig bei der dortigen Lösung ist, dass die Bürste des Erdungsgleitstücks nach wie vor in eine Kontaktöffnung der Standardschiene eingreift und bei ungünstigen Umgebungsbedingungen, beispielsweise hoher Feuchtigkeit oder zusätzlichen Überspannungen auf dem Leiter der Standardschiene nach wie vor die Gefahr von berührungslosen elektrisch leitenden Verbindungen, beispielsweise in Form eines Lichtbogens, besteht, wenn die Bürste des Erdungsgleitstücks fälschlicherweise in die Kontaktöffnung der Standardschiene eingesetzt wird.

Bei der FR 2 578 109 wird ein fehlerhaftes Eingreifen eines ersten Schleifstücks mit einem zweiten Leiterstrang dadurch sicher gestellt, dass der gesamte Stromabnehmer baulich so in die Schienenanordnung eingesetzt wird, dass ein falsches Kontaktieren nicht möglich ist.

Die DE 102 19 452 A1 offenbart einen Schleifleitungsträger mit mindestens zwei Halterungen für mindestens zwei Stromschienen, wobei eine Halterung des Schleifleitungsträgers zur Befestigung einer Code-Schiene dient. Eine fehlerhafte Kontaktierung zwischen Stromschienen und der Code-Schiene wird dort nicht sicher vermieden.

Aufgabe der Erfindung ist es deshalb, eine Schleifleitung, einen Stromabnehmer sowie ein Schleifleitungssystem bereitzustellen, welche die oben genannten Nachteile überwinden und eine einfache, schnelle und dennoch verwechslungssichere Verbindung eines bestimmten Schleifkontakts mit einem bestimmten Leiterstrang einer Schleifleitung zu ermöglichen.

Die Erfindung löst die Aufgabe durch eine Schleifleitung mit den Merkmalen des Anspruchs 1, einen Stromabnehmer mit den Merkmalen des Anspruchs 8 sowie ein Schleifleitungssystem mit den Merkmalen des Anspruchs 12. Vorteilhafte Weiterbildungen und Ausgestaltungen der Erfindung sind in den Unteransprüchen angegeben.

Die erfindungsgemäße Schleifleitung ist dadurch gekennzeichnet, dass die zweite Kontaktöffnung des zweiten Leiterstrangs so ausgebildet ist, dass der zur Verbindung mit dem ersten Leiterstrang vorgesehene erste Schleifkontakt nicht in die zweite Kontaktöffnung eingreifen kann und nicht mit dem zweiten Leiterstrang verbindbar ist. Der erfindungsgemäße Stromabnehmer ist dadurch gekennzeichnet, dass der erste Schleifkontakt so ausgebildet ist, dass er nicht in weitere Kontaktöffnungen von weiteren Leitersträngen der Schleifleitung eingreifen kann und nicht mit den weiteren Leitersträngen verbindbar ist.

Das erfindungsgemäße Schleifleitungssystem sieht vor, dass der erste Schleifkontakt zum Eingreifen in die erste Kontaktöffnung und zum elektrischen Verbinden mit dem ersten Leiterstrang an die erste Kontaktöffnung angepasst ist und die zweite Kontaktöffnung des zweiten Leiterstrangs so ausgebildet ist, dass der erste Schleifkontakt nicht in die zweite Kontaktöffnung eingreifen kann und nicht mit dem zweiten Leiterstrang verbindbar ist.

Durch die Erfindung kann folglich ein versehentliches oder absichtliches Einklippen des ersten Schleifkontakts in die zweite oder weitere Kontaktöffnungen zweiter oder weiterer Leiterstränge sicher und einfach verhindert werden.

In einer vorteilhaften Weiterbildung der Schleifleitung können Kontaktöffnungen weiterer länglicher Leiterstränge ebenfalls so ausgebildet sein, dass der erste Schleifkontakt nicht in die weiteren Kontaktöffnungen eingreifen kann und nicht mit den weiteren Leitersträngen verbindbar ist. Hierdurch kann ein versehentliches oder absichtliches Einklippen des ersten Schleifkontakts in die zweite oder weitere Kontaktöffnungen zweiter oder weiterer Leiterstränge sicher und einfach verhindert werden.

Besonders vorteilhaft kann die Erfindung eingesetzt werden, wenn der erste Leiterstrang ein Schutzleiter und der zweite bzw. die weiteren Leiterstränge Phasenleiter sind.

Fertigungs- und montagetechnisch vorteilhafte Ausführungen der Erfindung können vorsehen, dass die zweite bzw. weiteren Kontaktöffnungen schmäler sind als die erste Kontaktöffnung, bzw. dass ein zum Eingreifen in die erste Kontaktöffnung vorgesehener erster Bereich des ersten Schleifkontakts breiter ist als die Weite der weiteren Kontaktöffnungen.

In einer Ausbildung des Schleifleitungssystems kann eine erste verfahrbare Vorrichtung einen Stromabnehmer mit mindestens zwei Schleifkontakten aufweisen, welche zur Verbindung mit dem ersten bzw. zweiten Leiterstrang der Schleifleitung in die erste bzw. zweite Kontaktöffnung eingreifen, wobei der erste Leiterstrang ein Schutzleiter ist. Somit lässt sich sicherstellen, dass ein Schleifkontakt, der zur Verbindung mit dem Schutzleiter vorgesehen ist, nicht mit den strom- bzw. spannungsführenden Leitersträngen der Schleifleitung verbunden werden können. Die Erfindung kann auch bei einer zweiten verfahrbaren Vorrichtung vorgesehen werden, welche selbst keinen elektrischen Verbraucher aufweist und an der ersten verfahrbaren Vorrichtung angehängt ist. Bei der zweiten verfahrbaren Vorrichtung hat deren Stromabnehmer nur einen ersten Schleifkontakt, der so ausgebildet ist, dass er zum elektrischen Verbinden mit dem ersten Leiterstrang in die erste Kontaktöffnung und nicht in die zweite bzw. weitere Kontaktöffnungen des zweiten Leiterstrangs bzw. der weiteren Leiterstränge eingreifen kann.

Die Erfindung wird nun anhand von Ausführungsbeispielen mit Bezug auf die begleitenden Zeichnungen beschrieben. Diese zeigen:
- **Fig. 1**: eine schematische, dreidimensionale Ansicht eines Teils eines Schleifleitungssystems mit einem Transportgehänge und einer Schleifleitung;
- **Fig. 2**: einen Querschnitt einer Schleifleitung und eine schematische Draufsicht auf einen damit verbundenen Stromabnehmer des Schleifleitungssystems aus Fig. 1;
- **Fig. 3**: eine Detailansicht der Fig.2;
- **Fig. 4**: den Querschnitt durch die Schleifleitung aus Fig. 2 mit einer schematischen Draufsicht auf einen fehlerhaft angeordneten Schleifkontakt.

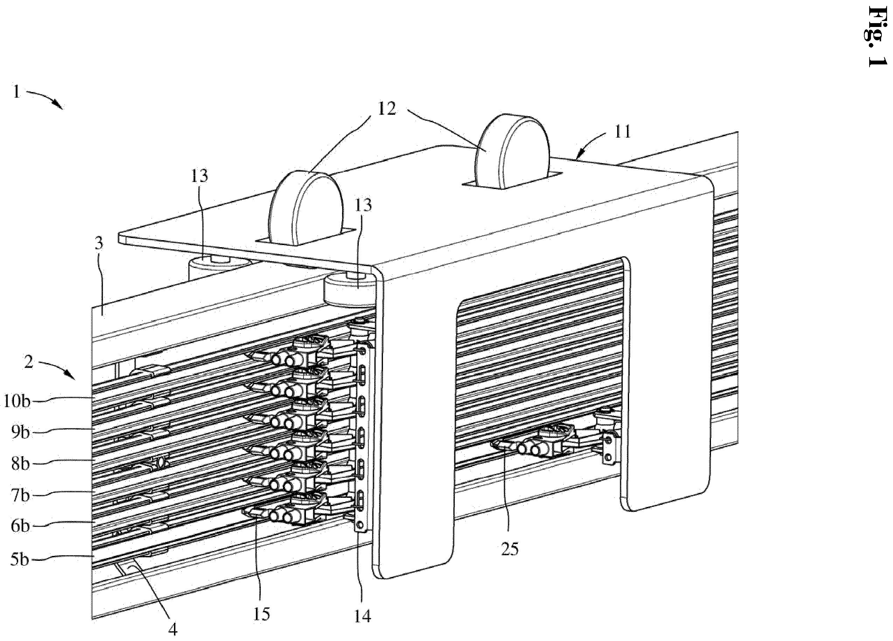

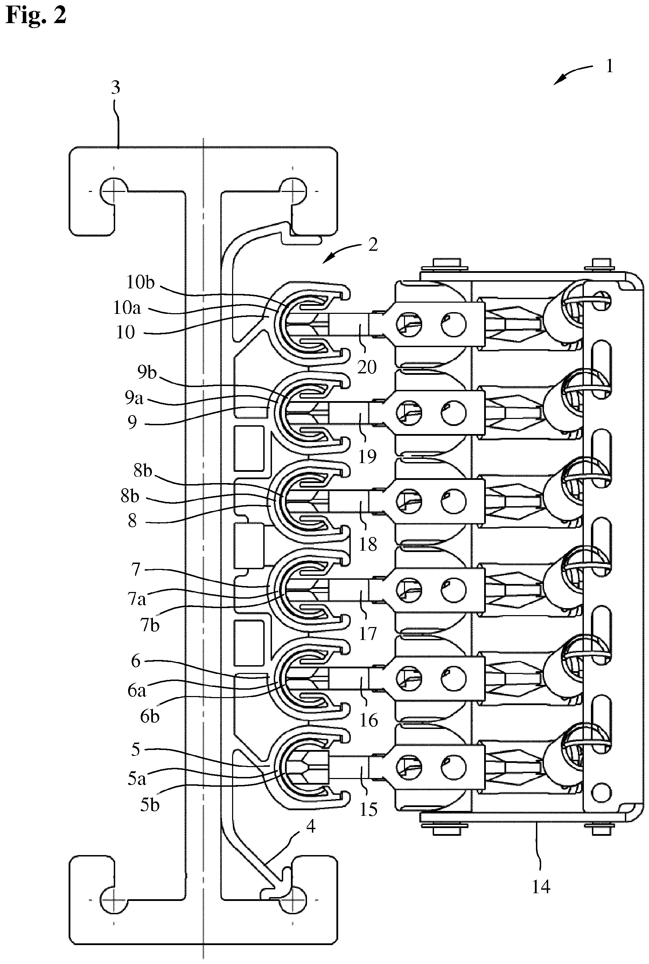

Das in Fig. 1 ausschnittsweise dargestellte Schleifleitungssystem 1 weist eine längliche Schleifleitung 2 und einen im Querschnitt doppel-T-förmigen Schienenstrang 3 auf, wie insbesondere aus dem Querschnitt in Fig. 2 deutlich wird. Auf einer in den Zeichnungen rechten Seite des Schienenstrangs 3 ist eine Leiterstranghalterung 4 angeordnet. Entlang des Schienenstrangs 3 sind zeichnerisch nicht dargestellte weitere entsprechende Leiterstranghalterungen angeordnet.

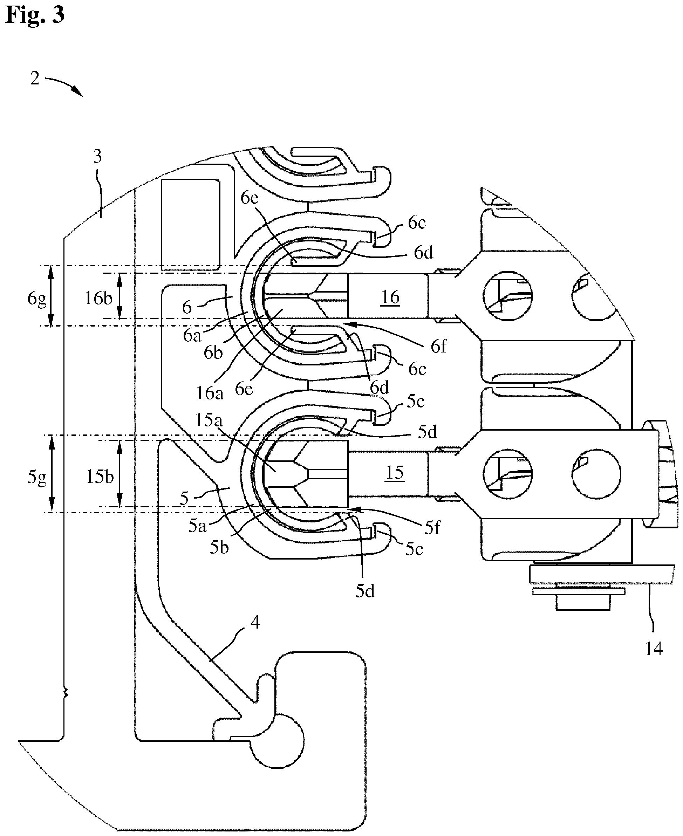

Die Leiterstranghalterung 4 weist insgesamt sechs Leiterstrangaufnahmen 5-10 mit jeweils einem im Wesentlichen U-förmigen Querschnitt auf, wobei das offene Ende des U-förmigen Querschnitts in Fig. 3 nach rechts zeigt. Die Leiterstranghalterung 4 kann aus Kunststoff oder Metall gefertigt sein. Anstelle von sechs Leiterstrangaufnahmen 5-10 können auch mehr oder weniger Leiterstrangaufnahmen vorgesehen werden.

In die Leiterstrangaufnahmen 5-10 sind jeweils längliche, über die gesamte Länge der Schleifleitung 2 verlaufende Isolierprofile 5a-10a aus elektrisch nicht leitendem Material, beispielsweise Kunststoff, eingesetzt. Die Isolierprofile 5a-10a weisen ebenfalls im Wesentlichen U-förmigen Querschnitt auf, der in den Zeichnungen nach rechts vom Schienenstrang 3 weg zeigt, so dass die offenen Seiten der U-förmigen Querschnitte der Leiterstrangaufnahmen 5-10 und der Isolierprofile 5a-10a gleich ausgerichtet sind.

In die Isolierprofile 5a-10a sind Leiterstränge 5b-10b aus elektrisch leitendem Material eingesetzt, welche im Wesentlichen C-förmigen Querschnitt aufweisen, wobei die offene Seite des C-förmigen Querschnitts in den Zeichnungen nach rechts vom Schienenstrang 3 wegzeigt. Hierdurch sind die offenen Seiten des C-förmigen Querschnitts der Leiterstränge 5b-10b und die offenen Seiten der U-förmigen Querschnitte der Leiterstrangaufnahmen 5-10 und der Isolierprofile 5a-10a gleich ausgerichtet. Die Isolierprofile 6a-10a sind hierbei über die gesamte Länge der Leiterstränge 5b-10b geführt.

Ein erster Leiterstrang 5b ist als Schutzleiterstrang ausgebildet und im normalen Betrieb geerdet und spannungsfrei. Ein unmittelbar neben dem ersten Leiterstrang 5b angeordneter Leiterstrang 6b sowie daran anschließende Leiterstränge 7b-10b sind als strom- bzw. spannungsführende Phasenleiterstränge ausgebildet und dienen zur Versorgung einer in Fig. 1 angedeuteten, als Transportgehänge 11 ausgebildeten verfahrbaren Vorrichtung mit elektrischer Energie.

Das Transportgehänge 11 weist einen in Fig. 1 nicht dargestellten elektrischen Antriebsmotor für Antriebsräder 12 auf. Die Antriebsräder 12 laufen auf dem waagrechten oberen Teil des oberen T-Teils des Schienenstrangs 3. Seitlich wird das Transportgehänge 11 durch Seitenführungsräder 13 geführt. Zur Versorgung elektrischer Verbraucher auf dem Transportgehänge 11 ist ein Stromabnehmer 14 vorgesehen.

Der Stromabnehmer 14 weist insgesamt 6 Schleifkontakte 15-20 auf, welche von einer zeichnerisch nicht dargestellten Ruhestellung in die in den Zeichnungen dargestellte Eingriffsstellung zur elektrisch leitenden Verbindung mit den Leitersträngen 5b-10b bewegbar sind. Der eigentliche elektrische Kontakt wird durch Stromabnehmerbürsten hergestellt, welche erste 15a, zweite 16a bzw. weitere 17a-20a Bereiche der Schleifkontakte 15-20 bilden und an den Leitersträngen 5b-10b entlangschleifen.

Da die weiteren Leiterstrangaufnahmen 6-10, Isolierprofile 6a-10a und Leiterstränge 6b-10b identisch ausgebildet sind, wird die Erfindung im Weiteren an des in Fig. 3 im Detail dargestellten ersten Leiterstrangs 5b und zweiten Leiterstrangs 6b erläutert.

Die erste bzw. zweite Leiterstrangaufnahme 5 bzw. 6 sind einstückig aus der Leiterstranghalterung 4 aus Kunststoff geformt. An den vorderen, freien Enden der Schenkel des U-förmigen Querschnitts der Leiterstrangaufnahmen 5 bzw. 6 sind zueinander weisende erste bzw. zweite Haltenasen 5c bzw. 6c vorgesehen, an denen die vorderen, freien Enden der Schenkel des U-förmigen Querschnitts der ersten bzw. zweiten Isolierprofile 5a bzw. 6a anschlagen. Es ist somit nicht ohne weiteres möglich, die ersten bzw. zweiten Isolierprofile 5a bzw. 6a unbeabsichtigt aus ersten bzw. zweiten Leiterstrangaufnahmen 5 bzw. 6 herauszuziehen.

Sowohl das erste Isolierprofil 5a für den als Schutzleiter dienenden ersten Leiterstrang 5b als auch das zweite Isolierprofil 6a für den als Phasenleiter dienenden zweiten Leiterstrang 6b weisen an den vorderen, freien Enden der Schenkel ihres U-förmigen Querschnitts Haltenasen 5d bzw. 6d auf. Die Haltenasen 5d bzw. 6d weisen zueinander in den durch die Schenkel umschlossenen Innenraum und sind zudem leicht zum Boden des U-förmigen Querschnitts gerichtet. Somit können die C-förmigen Leiterstränge 5b bzw. 6b vorteilhaft in den Isolierprofilen 5a bzw. 6a festgehalten werden, und zwar dadurch, dass die vorderen, freien Enden der Schenkel der C-förmigen Leiterstränge 5b bzw. 6b an den unteren, in Fig. 3 linken Flächen der Haltenasen 5d bzw. 6d anschlagen. Zudem ermöglicht die nach innen unten abgewinkelte Form der Haltenasen 5d bzw. 6d ein schnelles, einfaches Einsetzen der Leiterstränge 5b bzw. 6d in die Isolierprofile 5a bzw. 6a von in Fig. 3 rechts, während ein Herausfallen oder -ziehen sicher verhindert wird. Die gilt insbesondere auch für die Bereiche der Schleifleitung 2 zwischen den Leiterstranghalterungen 4.

Einziger wesentlicher Unterschied zwischen dem ersten Isolierprofil 5a für den ersten Leiterstrang 5b (Schutzleiter) und dem zweiten Isolierprofil 6a für den zweiten Leiterstrang (Phasenleiter) besteht darin, dass das zweite Isolierprofil 6a an den vorderen Enden der zweiten Haltenasen 6d Verengungsfortsätze 6e aufweist. Die Verengungsfortsätze 6e sind zum Boden des U-förmigen Querschnitts des zweite Isolierprofils 6a hin gerichtet und verlaufen im wesentlichen parallel zu den Schenkeln des U-förmigen Querschnitts des zweiten Isolierprofils 6a. Gleiches gilt auch für die weiteren Isolierprofile 7a-10a der weiteren Leiterstränge 7b-10b (Phasenleiter).

Beim ersten Leiterstrang 5b (Schutzleiter) wird somit eine längs des ersten Leiterstrangs 5b verlaufende erste Kontaktöffnung 5f mit einer ersten Weite 5g bereitgestellt, in die ein erster Schleifkontakt 15 des Stromabnehmers 14 eingreifen kann. Wie aus Fig. 3 gut erkennbar, ragt ein erster Bereich 15a des Schleifkontakts 15 durch die erste Kontaktöffnung 5f an den Haltenasen 5d vorbei und kontaktiert den ersten Leiterstrang 5b, um eine elektrisch leitende Verbindung herzustellen. Der erste Bereich 15a des ersten Schleifkontakts 15 weist dabei eine erste Breite 15b auf, die so bemessen ist, dass er zwischen den Haltenasen 5d nur ein kleines Spiel hat.

Beim zweiten Leiterstrang 6b (Phasenleiter) hingegen wird eine längs des zweiten Leiterstrangs 6b verlaufende zweite Kontaktöffnung 6f bereitgestellt, welche durch die Verengungsfortsätze 6e eine zweite Weite 6g aufweist, die schmäler ist als die erste Weite 5g der ersten Kontaktöffnung 5f und insbesondere schmäler als die erste Breite 15b des ersten Schleifkontakts 15. In die zweite Kontaktöffnung 6f kann ein zweiter Schleifkontakt 16 des Stromabnehmers 14 eingreifen, welcher mit einem zweiten Bereich 16a durch die zweite Kontaktöffnung 6f an den zweiten Haltenasen 6d und den Verengungsfortsätzen 6e vorbeiragt und den zweiten Leiterstrang 6b kontaktiert, um eine elektrisch leitende Verbindung herzustellen. Die zweite Breite 16b des zweiten Bereichs 16a des zweiten Schleifkontakts 16 ist dabei so schmal, dass er zwischen den zweiten Haltenasen 6d und den Verengungsfortsätzen 6e nur ein kleines Spiel aufweist. Zudem ist die zweite Breite 16b des zweiten Schleifkontakts 16 schmäler als die erste Breite 15b des ersten Schleifkontakts 15. Durch die im Wesentlichen parallel verlaufenden Verengungsfortsätze 6e ist ein einfaches und schnelles Ein- bzw. Ausklippen des zweiten Schleifkontakts 16 in die zweite Kontaktöffnung 6f möglich.

Somit kann vorteilhaft verhindert werden, dass der erste Bereich 15a des ersten Schleifontakts 15 durch die zweite Kontaktöffnung 6f in direkten Kontakt mit dem zweiten Leiterstrang 6b gelangt oder der Abstand zwischen erstem Schleifkontaktbereich 15a und zweitem Leiterstrang 6b so klein wird, dass ein Spannungsüberschlag erfolgen und somit eine leitende Verbindung hergestellt werden kann.

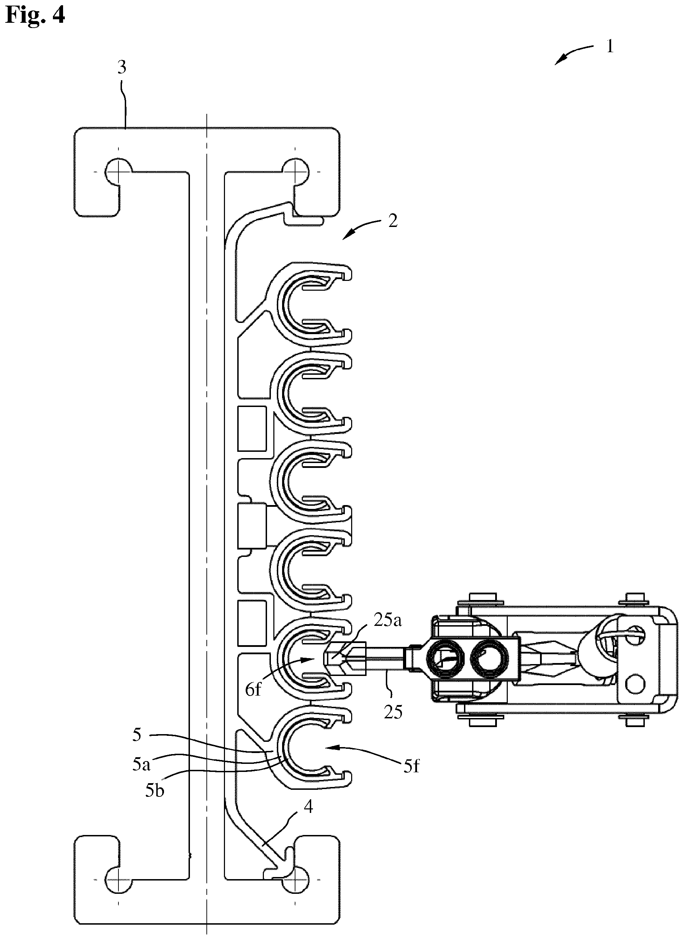

Sollte der erste Schleifkontakt 15 versehentlich in die zweite Kontaktöffnung 6f eingeklippt werden, wird durch deren geringere zweite Weite 6g sicher verhindert, dass die erste Stromabnehmerbürste 15b in elektrischem Kontakt mit dem stromführenden zweiten Leiterstrang 6b gelangt, da die erste Stromabnehmerbürste 15b nicht durch die zweite Kontaktöffnung 6f passt, wie beispielhaft in Fig. 4 dargestellt. Selbst wenn das falsche Einklippen nicht bemerkt wird, schleift die erste Stromabnehmerbürste 15b lediglich auf dem zweiten Isolierprofil 6a entlang, sodass ein ausreichender Abstand zum zweiten Leiterstrang 6b verbleibt. Somit ist sichergestellt, dass über den ersten Schutzleiterschleifkontakt 15 keine Spannung an Gehäuseteile oder andere, nicht zur Stromführung vorgesehene Teile des Transportgehänges 11 gelegt wird.

Vorteilhaft können hierbei sowohl der erste Leiterstrang 5b (Schutzleiter) als auch die anderen Leiterstränge 6b-10b (Phasenleiter) jeweils mit gleichem Abstand zu den Kontaktöffnungen 5f, 6f des jeweiligen Leiterstrangs 5b-10b montiert werden. Hierdurch können die oft gesetzlich vorgeschriebenen Abstände zur Verhinderung eines Spannungsüberschlags zwischen den Leitersträngen 6b-10b und im Bereich der Kontaktöffnungen 5f, 6f befindlichen Gegenständen ohne wesentliche Änderung des Aufbaus sichergestellt werden. Es wird dann vorteilhaft nur der zum Leiterstrang 5b hin gewandte erste Bereich 15a des Schutzleiter-Schleifkontakts 15, also Stromabnehmerbürste bzw. Schleifstück selbst, durch einen breiteren Schleifkontakt mit breiterem ersten Bereich 15a, also eine breitere Stromabnehmerbürste bzw. Schleifstück, ersetzt und die Breite der ersten Kontaktöffnungen 5f des Schutzleiter-Leiterstrangs 5b vergrößert. Hierdurch können auch vorhandene Stromabnehmer unverändert weiter verwendet werden, so dass im Normalbetrieb ohne fehlerhaft eingesetzte Schleifkontakte die Schleifkontakte 15-20 unverändert gut in den einzelnen Leitersträngen 5b-10b geführt werden.

Aus Gründen der höheren Sicherheit sieht das Transportgehänge 11 aus Fig. 1 einen weiteren Schleifkontakt 25 für den Schutzleiterstrang 5b vor, neben dem keine weiteren Schleifkontakte für die Phasenleiterstränge 6b-10b angebracht sind. Gerade in diesem Fall besteht leicht die Gefahr, dass der Schleifkontakt 25 in den neben ihm liegenden Phasenleiterstrang 6b eingeklippt wird. Dieses falsche Einklippen ist beispielhaft in Fig. 4 dargstellt. Wie leicht erkennbar, ist es aufgrund der größeren Breite der Stromabnehmerbürste 25b des Schleifkontakts 25 nicht möglich, diesen mit dem strom- und spannungsführenden Leiterstrang 6b elektrisch zu verbinden.

Auch nachlaufende Transportgehänge, die selbst keine elektrischen Verbraucher tragen, sind in der Regel ebenfalls über einen Schutzschleifkontakt mit dem Schutzleiterstrang verbunden. Um auch bei diesen nachlaufenden Transportgehängen ein falsches Einklippen zu verhindern, kann die Erfindung vorteilhaft dort eingesetzt werden, indem deren Schutzschleifkontakt wie der erste Schleifkontakt 15 in obigem Ausführungsbeispiel ausgebildet ist, also zu breit ist, um in die zweite oder weitere Kontaktöffnungen 6f, 7f-10f eingesetzt zu werden und eine elektrisch leitende Verbindung mit den entsprechenden Leitersträngen 6b-10b herzustellen. Obige Ausführungen gelten dann entsprechend.

Anstelle des U-förmigen Querschnitts für die Leiterstrangaufnahmen 5-10 bzw. die Isolierprofile 5a-10a und des C-förmigen Querschnitts für die Leiterstränge 5b-10b können auch andere geeignete Querschnitte gewählt werden, die Kontaktöffnungen 5f-10f für die Schleifkontakte 15-20 ermöglichen.

## Patentansprüche

1. Schleifleitung (2) zur Versorgung mindestens einer an der Schleifleitung (2) verfahrbaren Vorrichtung (11), mit einem ersten länglichen Leiterstrang (5b) und mindestens einem weiteren, zweiten länglichen Leiterstrang (6b), wobei der erste (5b) bzw. zweite (6b) Leiterstrang eine entlang seiner Längsausdehnung verlaufende erste (5f) bzw. zweite (6f) Kontaktöffnung zur Aufnahme eines Teils (15a; 16a) eines ersten (15) bzw. zweiten (16) Schleifkontakts eines Stromabnehmers (14) der Vorrichtung (11) aufweist, **dadurch gekennzeichnet, dass** die zweite Kontaktöffnung (6f) des zweiten Leiterstrangs (6b) so ausgebildet ist, dass der zur Verbindung mit dem ersten Leiterstrang (5b) vorgesehene erste Schleifkontakt (15) nicht in die zweite Kontaktöffnung (6f) eingreifen kann und nicht mit dem zweiten Leiterstrang (9) verbindbar ist.

2. Schleifleitung (2) nach Anspruch 1, **dadurch gekennzeichnet, dass** Kontaktöffnungen (7f-10f) weiterer länglicher Leiterstränge (7b-10b) so ausgebildet sind, dass der erste Schleifkontakt (15) nicht in die weiteren Kontaktöffnungen (7f-10f) eingreifen kann und nicht mit den weiteren Leitersträngen (7b-10b) verbindbar ist.

3. Schleifleitung (2) nach einem der voranstehenden Ansprüche, **dadurch gekennzeichnet, dass** die zweite (6f) bzw. weiteren (7f-10f) Kontaktöffnungen eine Weite (6g) aufweisen, die schmäler ist als eine Weite (5g) der ersten Kontaktöffnung (5f).

4. Schleifleitung (2) nach einem der voranstehenden Ansprüche, **dadurch gekennzeichnet, dass** die Leiterstränge (5b-10b) jeweils in längliche Isolierprofile (5a-10a) mit im wesentlichen U-förmigen Querschnitt einsetzt sind, wobei an den vorderen Enden der Schenkel des U-förmigen Querschnitts der Isolierprofile (5a-10a) zueinander weisende Haltenasen (5d-10d) zum Halten der Leitungsstränge (5b-10b) in den Isolierprofilen (5a-10a) vorgesehen sind und die Kontaktöffnungen (5f-10f) zur offenen Seite des U-förmigen Querschnitts der Isolierprofile (5a-10a) hin gerichtet sind, und wobei die Weite (5g) der ersten Kontaktöffnung (5f) durch den Abstand der zueinander weisenden Haltenasen (5c) bestimmt wird.

5. Schleifleitung (2) nach Anspruch 4, **dadurch gekennzeichnet, dass** an den vorderen Enden der Haltenasen (6c-10c) der zweiten (6a) bzw. weiteren (7a-10a) Isolierprofile zum Boden des U-förmigen Querschnitts hin gerichtete Verengungsfortsätze (6e-10e) angeordnet sind, welche die Weite (6g-10g) der zweiten (6f) und weiteren (7f-10f) Kontaktöffnungen bestimmen.

6. Schleifleitung (2) nach Anspruch 4 oder 5, **dadurch gekennzeichnet, dass** Leiteraufnahmen (5-10) mit im wesentlichen U-förmigem Querschnitt vorgesehen sind, in welchen die Isolierprofile (5a-10a) gehalten werden, wobei die Kontaktöffnungen (5f-10f) jeweils zur offenen Seite des U-förmigen Querschnitts hin gerichtet sind.

7. Schleifleitung (2) nach Anspruch 6, **dadurch gekennzeichnet, dass** an den vorderen Enden der Schenkel des U-förmigen Querschnitts der Leiteraufnahmen (5-10) zueinander weisende Rastnasen (5c-10c) zum Halten der Isolierprofile (5a-10a) in den Leiteraufnahmen (5-10) angeordnet sind.

8. Stromabnehmer (3) für eine an einer mehrsträngigen Schleifleitung (2) verfahrbare Vorrichtung (11), mit mindestens einem zum Eingreifen in eine entlang der Länge eines ersten Leiterstrangs (5b) der Schleifleitung (2) verlaufenden ersten Kontaktöffnung (5f) und zum elektrischen Verbinden mit dem ersten Leiterstrang (5b) vorgesehenen ersten Schleifkontakt (15), **dadurch gekennzeichnet, dass** der erste Schleifkontakt (15) so ausgebildet ist, dass er nicht in weitere Kontaktöffnungen (6f-10f) von weiteren Leiterstränge (6b-10b) der Schleifleitung (2) eingreifen kann und nicht mit den weiteren Leitersträngen (6b-10b) verbindbar ist.

9. Stromabnehmer nach Anspruch 8, **dadurch gekennzeichnet, dass** ein zum Eingreifen in die erste Kontaktöffnung (5f) vorgesehener erster Bereich (15a) des ersten Schleifkontakts (15) eine Breite (15b) aufweist, die breiter ist als die Weite (6g) der weiteren Kontaktöffnungen (6f-10f).

10. Stromabnehmer nach Anspruch 9, **dadurch gekennzeichnet, dass** zum Eingreifen in die weiteren Kontaktöffnung (6f-10f) vorgesehene Bereiche (16a-20a) weiterer Schleifkontakte (16-20) eine Breite (16g) aufweisen, die schmäler ist als die Breite (15b) des ersten Bereichs (15a) des ersten Schleifkontakts (15).

11. Stromabnehmer nach Anspruch 9 oder 10, **dadurch gekennzeichnet, dass** die Bereiche (15a-20a) der Schleifkontakte (15-20) durch Stromabnehmerbürsten gebildet sind.

12. Schleifleitungssystem (1) mit einem oder mehreren an einer Schleifleitung (2) verfahrbaren Vorrichtungen (11), von denen mindestens eine einen Stromabnehmer (14) aufweist, wobei die Schleifleitung (2) einen ersten länglichen Leiterstrang (5b) und mindestens einem weiteren, zweiten länglichen Leiterstrang (6b) aufweist, wobei der erste (5b) bzw. zweite (6b) Leiterstrang eine entlang seiner Längsausdehnung verlaufende erste (5f) bzw. zweite (6f) Kontaktöffnung zur Aufnahme eines Teils (15a; 16a) eines ersten (15) bzw. zweiten (16) Schleifkontakts des Stromabnehmers (14) aufweist, **dadurch gekennzeichnet, dass** der erste Schleifkontakt (15) zum Eingreifen in die erste Kontaktöffnung (5f) und zum elektrischen Verbinden mit dem ersten Leiterstrang (5b) an die erste Kontaktöffnung (5f) angepasst ist und die zweite Kontaktöffnung (6f) des zweiten Leiterstrangs (6b) so ausgebildet ist, dass der erste Schleifkontakt (15) nicht in die zweite Kontaktöffnung (6f) eingreifen kann und nicht mit dem zweiten Leiterstrang (9) verbindbar ist.

13. Schleifleitungssystem nach Anspruch 12, **dadurch gekennzeichnet, dass** die Schleifleitung (2) nach einem der Ansprüche 1 bis 7 und/oder der Stromabnehmer (14) nach einem der Ansprüche 8 bis 11 ausgebildet sind.

14. Schleifleitungssystem nach einem der Ansprüche 12 bis 13, **dadurch gekennzeichnet, dass** eine erste verfahrbare Vorrichtung (11) einen Stromabnehmer (14) mit mindestens zwei Schleifkontakten (14, 15) aufweist, welche zur Verbindung mit dem ersten (5b) bzw. zweiten (6b) Leiterstrang der Schleifleitung (2) in die erste (5f) bzw. zweite (6f) Kontaktöffnung eingreifen, wobei der erste Leiterstrang (5f) ein Schutzleiter ist.

15. Schleifleitungssystem nach Anspruch 14, **dadurch gekennzeichnet, dass** an der ersten verfahrbaren Vorrichtung eine zweite verfahrbare Vorrichtung angehängt ist, deren Stromabnehmer nur einen ersten Schleifkontakt hat, der so ausgebildet ist, dass er zum elektrischen Verbinden mit dem ersten Leiterstrang (5b) in die erste Kontaktöffnung (5f) und nicht in die zweite (6f) bzw. weitere (7f-10f) Kontaktöffnungen des zweiten Leiterstrangs (6b) bzw. der weiteren Leiterstränge (7f-10f) eingreifen kann.
